# EUROPEAN PATENT APPLICATION

(11) **EP 4 686 285 A1**
(43) Date of publication of application: **28.01.2026**
(21) Application number: 24773975.8
(22) Date of filing: 13.03.2024
(51) Int. Cl.: H04W 72/044

(54) **METHOD AND APPARATUS USED IN NODE FOR WIRELESS COMMUNICATION**

(30) Priority: 21.03.2023 CN 202310274884
(71) Applicant: Apogee Networks, LLC, Dallas, TX 75201 (US)
(72) Inventor: JIANG, Qi, Shanghai 201206 (CN); WANG, Ping, Shanghai 201206 (CN); ZHANG, Xiaobo, Shanghai 201206 (CN)
(74) Representative: Gunzelmann, Rainer
(86) International application number: PCT/CN2024/081363
(87) International publication number: WO 2024/193409

(57) **Abstract**

The present application discloses a method and apparatus used in a node for wireless communication. A first node receives first signaling, the first signaling being used for configuring a first reference signal resource; receives a first reference signal in the first reference signal resource; and sends first channel information. Measurement for the first reference signal is used for generating the first channel information; a power offset of the sending power of the first reference signal with respect to the sending power of a broadcast signal is a first candidate offset among a plurality of candidate offsets; each of the plurality of candidate offsets is associated with a CSI type set; the first candidate offset is a candidate offset, among the plurality of candidate offsets, associated with the first CSI type set; and the first channel information corresponds to one or more CSI types in the first CSI type set. The present application improves the determination of reference signal power in different scenes, thereby improving the precision of measurement and the reliability of transmission.

## Description

### Technical Field

The present application relates to a transmission method and apparatus in a wireless communication system, in particular to a transmission method and apparatus for a CSI-RS (Channel State Information Reference Signal).

### Background Art

Application scenarios of wireless communication systems in the future will become more and more diversified, and different application scenarios will put forward different performance requirements for the systems. In order to meet different performance requirements of various application scenarios, the 3GPP (3rd Generation Partner Project) RAN (Radio Access Network) #72 plenary meeting decided to study the new radio technology (NR) (or 5G), a WI (Work Item) of the new radio technology (NR) was passed at the 3GPP RAN #75 plenary meeting, and standardization work on NR was started.

In the 3GPP RAN #88e meeting and the 3GPP Rel-18 workshop, application of AI (Artificial Intelligence)/ML (Machine Learning) in a physical layer of a wireless communication system received extensive attention and discussion. Using AI/ML to enhance CSI feedback to reduce overhead and improve accuracy is generally considered as one of important applications of ML/AI in the physical layer.

In traditional wireless communication, a UE (User Equipment) report may include at least one of various auxiliary information, such as CSI, beam management-related auxiliary information, positioning-related auxiliary information, etc., and among them, types of CSI include a CRI (CSI-RS Resource Indicator), an RI (Rank indication), a PMI (Precoding matrix indicator), or a CQI (Channel quality indicator), etc.

A network device selects appropriate transmission parameters for the UE based on the report of the UE, such as a cell for residing, an MCS (Modulation and Coding Scheme), a TPMI (Transmitted Precoding Matrix Indicator, Channel State Information Reference Signal Resource Indicator), a TCI (Transmission Configuration Indication), and other parameters. In addition, the UE report can be used for optimizing network parameters, such as better cell coverage, switching base stations based on UE positions, etc.

### Summary of the Invention

Reference signals play an important role in wireless communication. In an existing system, a network configures UE with a reference signal resource for receiving a reference signal, and sends a reference signal on the configured reference signal resource. The UE executes measurement on the configured reference signal resource, and acquires measurement information. The inventors have discovered that when the reference signal is enhanced using AI/ML, an existing method of determining a sending power value of the reference signal will need to be improved, and thus how to determine the power value of the reference signal is a problem that needs to be solved.

In view of the above problem, the present application discloses a solution. It needs to be noted that although the original intention of the present application is to target ML/AI scenarios, the present application can also be applied to other non-ML/AI scenarios. Further, for different scenarios (such as other non-ML/AI scenarios, including but not limited to capacity enhancement systems, short-range communication systems, unlicensed frequency domain communication, IoT (Internet of Things), URLLC (Ultra Reliable Low Latency Communication) networks, Internet of Vehicles, etc.), adopting a unified design scheme also helps to reduce hardware complexity and costs. In the case of no conflict, embodiments and features in the embodiments in any node of the present application can be applied to any other nodes. In the case of no conflict, embodiments and features in the embodiments of the present application can be arbitrarily combined with each other.

In particular, interpretations of terminologies, nouns, functions, and variables in the present application (if not specifically stated) can refer to definitions in the 3GPP specification protocol TS36 series, TS38 series, and TS37 series. If necessary, reference can be made to 3GPP standards TS38.211, TS38.212, TS38.213, TS38.214, TS38.215, TS38.321, TS38.331, TS38.305, TS38.304, and TS37.355 to assist in understanding the present application.

As one embodiment, the interpretations of the terminologies in the present application refer to definitions of the 3GPP specification protocol TS36 series.

As one embodiment, the interpretations of the terminologies in the present application refer to definitions of the 3GPP specification protocol TS38 series.

As one embodiment, the interpretations of the terminologies in the present application refer to definitions of the 3GPP specification protocol TS37 series.

As one embodiment, the interpretations of the terminologies in the present application refer to definitions of a specification protocol of the Institute of Electrical and Electronics Engineers (IEEE).

The present application discloses a method used in a first node for wireless communication, comprising:
receiving first signaling, the first signaling being used for configuring a first reference signal resource; receiving a first reference signal in the first reference signal resource;
and sending first channel information,
wherein measurement for the first reference signal is used for generating the first channel information, and a power offset of sending power of the first reference signal with respect to sending power of a broadcast signal is a first candidate offset among a plurality of candidate offsets; each of the plurality of candidate offsets is associated with one CSI type set, and the one CSI type set comprises at least one CSI type; candidates of the CSI type comprise at least one of an L1-RSRP, a CRI, an RI, a PMI, a CQI, and an LI; the first candidate offset is a candidate offset, among the plurality of candidate offsets, associated with a first CSI type set; and the first channel information corresponds to one or more CSI types in the first CSI type set.

As one embodiment, the problem to be solved by the present application comprises: how to determine a power offset of sending power of the first reference signal.

As one embodiment, features of the above method include: associating a power offset of sending power of the first reference signal with a CSI type set, and determining the power offset of the sending power of the first reference signal through the CSI type set, thereby solving the above problem.

As one embodiment, features of the above method comprise: a plurality of candidate power offsets correspond to a plurality of different CSI type sets respectively.

As one embodiment, features of the above method comprise: determining a power offset of sending power of the first reference signal based on a CSI type in a first CSI type set corresponding to first channel information.

As one embodiment, benefits of the above method comprise: being beneficial for flexibly configuring a power offset of sending power of the first reference signal.

As one embodiment, benefits of the above method comprise: being beneficial for improving the reliability of reference signal transmission.

As one embodiment, benefits of the above method comprise: being beneficial for improving the reliability of measurement.

According to one aspect of the present application, the above method is characterized in that the first signaling is used for indicating the plurality of power offsets.

As one embodiment, benefits of the above method comprise: indicating the first candidate offset from the plurality of power offsets without needing additional signaling, thereby being beneficial for saving signaling overhead.

As one embodiment, benefits of the above method comprise: indicating a plurality of power offsets through first signaling, namely RRC signaling, and ensuring good forward compatibility and configuration flexibility.

According to one aspect of the present application, the above method is characterized in that the candidates of the CSI type comprise a first type, and the first type meets at least one of the following conditions:
channel information recovered by a recipient based on the first type received is unknown to the first node;
a generator for generating the first type is obtained based on training;
and the first type does not belong to CSI defined by 3GPP Rel-17 or a previous version of 3GPP Rel-17.

As one embodiment, benefits of the above method comprise: being beneficial for backward compatibility.

As one embodiment, benefits of the above method comprise: adapting to new CSI calculation scenes.

According to one aspect of the present application, the above method is characterized in that the first candidate offset is related to whether the first CSI type set comprises the first type.

As one embodiment, features of the above method comprise: whether the first CSI type set comprises the first type is used for implicitly indicating the first candidate offset.

As one embodiment, benefits of the above method comprise: the first candidate offset can be determined through whether the first CSI type set comprises the first type, without needing additional signaling for indication, thus being beneficial for saving signaling overhead.

According to one aspect of the present application, the above method is characterized in that any CSI type in the first CSI type set is the first type, or any CSI type in the first CSI type set is not the first type.

As one embodiment, features of the above method comprise: one CSI type set does not simultaneously include both the first type and CSI types other than the first type.

As one embodiment, features of the above method comprise: one candidate offset is associated with one CSI type set, and a CSI type set including the first type and a CSI type set not including the first type correspond to different power offsets respectively.

As one embodiment, features of the above method comprise: being beneficial for rationally configuring candidate offsets associated with different CSI type sets.

According to one aspect of the present application, the above method is characterized by comprising:
receiving target signaling,
wherein the target signaling is used for triggering sending of the first channel information, and CRC included in the target signaling is scrambled through an RNTI other than a C-RNTI.

As one embodiment, benefits of the above method comprise: making minor changes to the current standards, and being beneficial for forward compatibility.

As one embodiment, benefits of the above method comprise: saving signaling overhead, and improving spectral efficiency.

According to one aspect of the present application, the above method is characterized in that the CRC included in the target signaling is scrambled through a terminal group-dedicated RNTI, and terminals in a terminal group corresponding to the terminal group-dedicated RNTI have AI capability.

As one embodiment, features of the above method comprise: the CRC included in the target signaling is used for determining a CSI type corresponding to the first channel information.

According to one aspect of the present application, the above method is characterized in that the first node comprises one piece of user equipment.

According to one aspect of the present application, the above method is characterized in that the first node comprises one relay node.

According to one aspect of the present application, the above method is characterized in that the first node has AI/ML capability.

According to one aspect of the present application, the above method is characterized in that the first node supports AI/ML-based CSI calculation.

According to one aspect of the present application, the above method is characterized in that the first node supports AI/ML-based CSI reporting.

The present application discloses a method used in a second node for wireless communication, comprising:
sending first signaling, the first signaling being used for configuring a first reference signal resource; sending a first reference signal in the first reference signal resource;
and receiving first channel information,
wherein measurement for the first reference signal by a recipient of the first reference signal is used for generating the first channel information, and a power offset of sending power of the first reference signal with respect to sending power of a broadcast signal is a first candidate offset among a plurality of candidate offsets; each of the plurality of candidate offsets is associated with one CSI type set, and the one CSI type set comprises at least one CSI type; candidates of the CSI type comprise at least one of an L1-RSRP, a CRI, an RI, a PMI, a CQI, and an LI; the first candidate offset is a candidate offset, among the plurality of candidate offsets, associated with a first CSI type set; and the first channel information corresponds to one or more CSI types in the first CSI type set.

According to one aspect of the present application, the above method is characterized in that the first signaling is used for indicating the plurality of power offsets.

According to one aspect of the present application, the above method is characterized in that the candidates of the CSI type comprise a first type, and the first type meets at least one of the following conditions:
channel information recovered by a recipient based on the first type received is unknown to the first node;
a generator for generating the first type is obtained based on training;
and the first type does not belong to CSI defined by 3GPP Rel-17 or a previous version of 3GPP Rel-17.

According to one aspect of the present application, the above method is characterized in that the first candidate offset is related to whether the first CSI type set comprises the first type.

According to one aspect of the present application, the above method is characterized in that any CSI type in the first CSI type set is the first type, or any CSI type in the first CSI type set is not the first type.

According to one aspect of the present application, the above method is characterized by comprising:
sending target signaling,
wherein the target signaling is used for triggering sending of the first channel information, and CRC included in the target signaling is scrambled through an RNTI other than a C-RNTI.

According to one aspect of the present application, the above method is characterized in that the CRC included in the target signaling is scrambled through a terminal group-dedicated RNTI, and terminals in a terminal group corresponding to the terminal group-dedicated RNTI have AI capability.

According to one aspect of the present application, the above method is characterized in that the second node is a base station.

According to one aspect of the present application, the above method is characterized in that the second node is user equipment.

According to one aspect of the present application, the above method is characterized in that the second node is a relay node.

The present application discloses a device for a first node for wireless communication, comprising:
a first receiver receiving first signaling, the first signaling being used for configuring a first reference signal resource; and receiving a first reference signal in the first reference signal resource;
and a first transmitter sending first channel information,
wherein measurement for the first reference signal is used for generating the first channel information, and a power offset of sending power of the first reference signal with respect to sending power of a broadcast signal is a first candidate offset among a plurality of candidate offsets; each of the plurality of candidate offsets is associated with one CSI type set, and the one CSI type set comprises at least one CSI type; candidates of the CSI type comprise at least one of an L1-RSRP, a CRI, an RI, a PMI, a CQI, and an LI; the first candidate offset is a candidate offset, among the plurality of candidate offsets, associated with a first CSI type set; and the first channel information corresponds to one or more CSI types in the first CSI type set.

The present application discloses a device for a second node for wireless communication, comprising:
a second transmitter sending first signaling, the first signaling being used for configuring a first reference signal resource; and sending a first reference signal in the first reference signal resource;
and a second receiver receiving first channel information,
wherein measurement for the first reference signal is used for generating the first channel information, and a power offset of sending power of the first reference signal with respect to sending power of a broadcast signal is a first candidate offset among a plurality of candidate offsets; each of the plurality of candidate offsets is associated with one CSI type set, and the one CSI type set comprises at least one CSI type; candidates of the CSI type comprise at least one of an L1-RSRP, a CRI, an RI, a PMI, a CQI, and an LI; the first candidate offset is a candidate offset, among the plurality of candidate offsets, associated with a first CSI type set; and the first channel information corresponds to one or more CSI types in the first CSI type set.

As one embodiment, compared with a traditional solution, the present application has, but not limited to, the following advantages:
being beneficial for flexibly and reasonably configuring a power offset of sending power of the first reference signal;
being beneficial for saving signaling overhead; and
maintaining good forward compatibility on the basis of optimizing system design and improving system performance.

### Brief Description of the Drawings

Other features, purposes and advantages of the present application will become more apparent by reading the detailed description of non-limiting embodiments in the following drawings with reference to them:
FIG. 1 shows a flowchart of a first node according to one embodiment of the present application;
FIG. 2 shows a schematic diagram of a network architecture according to one embodiment of the present application;
FIG. 3 shows a schematic diagram of an embodiment of a wireless protocol architecture of a user plane and a control plane according to one embodiment of the present application;
FIG. 4 shows a schematic diagram of a first communication device and a second communication device according to one embodiment of the present application;
FIG. 5 shows a first flowchart of transmission between a first node and a second node according to one embodiment of the present application;
FIG. 6 shows a second flowchart of transmission between a first node and a second node according to one embodiment of the present application;
FIG. 7 shows a schematic diagram of first signaling according to one embodiment of the present application;
FIG. 8 shows a schematic diagram of a first type according to one embodiment of the present application;
FIG. 9 shows a schematic diagram of a first candidate offset according to one embodiment of the present application;
FIG. 10 shows a schematic diagram of a first CSI type set according to one embodiment of the present application;
FIG. 11 shows a schematic diagram of a terminal group-dedicated RNTI according to one embodiment of the present application;
FIG. 12 shows a structural block diagram of a processing apparatus used in a first node according to one embodiment of the present application; and
FIG. 13 shows a structural block diagram of a processing apparatus used in a second node according to one embodiment of the present application.

### Detailed Description of Embodiments

The technical solution of the present application will be further described in detail below in conjunction with the drawings. It should be noted that, in the case of no conflict, embodiments and features in the embodiments in the present application may be arbitrarily combined with each other.

### Embodiment 1

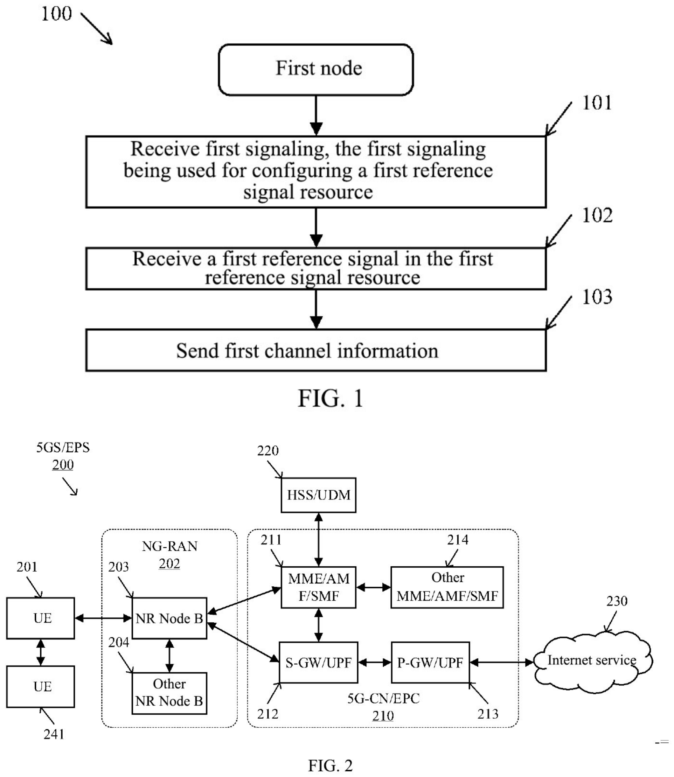

Embodiment 1 illustrates a flowchart of a first node according to one embodiment of the present application, as shown in FIG. 1. In FIG. 1, each block represents one step. In particular, the order of steps in the blocks does not represent a specific time sequence relation among the steps.

The first node receives first signaling in step 101, the first signaling being used for configuring a first reference signal resource; receives a first reference signal in the first reference signal resource in step 102; and sends first channel information in step 103.

In Embodiment 1, measurement for the first reference signal is used for generating the first channel information, and a power offset of sending power of the first reference signal with respect to sending power of a broadcast signal is a first candidate offset among a plurality of candidate offsets; each of the plurality of candidate offsets is associated with one CSI type set, and the one CSI type set comprises at least one CSI type; candidates of the CSI type comprise at least one of L1-RSRP, CRI, RI, PMI, CQI, and LI; the first candidate offset is a candidate offset, among the plurality of candidate offsets, associated with a first CSI type set; and the first channel information corresponds to one or more CSI types in the first CSI type set.

As one embodiment, the CSI refers to: Channel State Information.

As one embodiment, the L1-RSRP refers to: Layer 1 Reference Signal Received Power.

As one embodiment, the CRI refers to: CSI-RS Resource Indicator, Channel Measurement Pilot Resource Index.

As one embodiment, the RI refers to: Rank Indicator.

As one embodiment, the PMI refers to: Precoding Matrix Indicator.

As one embodiment, the CQI refers to: Channel Quality Indicator.

As one embodiment, the LI refers to: Layer Indicator.

As one embodiment, the first signaling comprises higher layer signaling.

As one embodiment, the first signaling comprises RRC (Radio Resource Control) signaling.

As one embodiment, the first signaling is RRC signaling.

As one embodiment, the first signaling comprises information in all or part of fields in one RRC IE (Information Element).

As one embodiment, the first signaling comprises information in all or part of fields in each RRC IE of a plurality of RRC IEs.

As one embodiment, the first signaling comprises dynamic signaling.

As one embodiment, the first signaling comprises MAC (Medium Access Control Layer Control Element) sublayer signaling.

As one embodiment, the first signaling comprises a MAC CE (Control Element).

As one embodiment, the first signaling is carried by RRC signaling and a MAC CE jointly.

As one embodiment, the first signaling is used for configuring the first reference signal resource.

As one embodiment, the first signaling comprises configuration information of the first reference signal resource.

As one embodiment, the first signaling is used for configuring a first reference signal resource set, and the first reference signal resource set comprises the first reference signal resource.

As one sub-embodiment of the above embodiment, the first signaling is used for indicating configuration information of the first reference signal resource set.

As one subsidiary embodiment of the above sub-embodiment, the configuration information of the first reference signal resource set comprises configuration information of each reference signal resource in the first reference signal resource set.

As one sub-embodiment of the above embodiment, the first reference signal resource set corresponds to one CSI-RS resource set.

As one embodiment, configuration information of one reference signal resource comprises part or all of: time domain resources, frequency domain resources, CDM (Code Division Multiplexing) types, Scrambling IDs, periods, QCL (Quasi Co-Location), density, numbers of port(s), cycle shift, OCCs (Orthogonal Cover Codes), sending sequences, and TCIs (Transmission Configuration Indicators).

As one embodiment, the first signaling comprises part or all of fields in a CSI-MeasConfig IE.

As one embodiment, the first signaling comprises part or all of fields in an NZP-CSI-RS-Resource IE.

As one embodiment, the first signaling comprises part or all of fields in a CSI-RS-ResourceMapping IE.

As one embodiment, the first signaling comprises part or all of fields in a CSI-ResourcePeriodicityAndOffset IE.

As one embodiment, the first signaling comprises part or all of fields in an NZP-CSI-RS-ResourceSet IE.

As one embodiment, the first signaling comprises part or all of fields in a CSI-IM-Resource IE.

As one embodiment, the first signaling comprises part or all of fields in a CSI-IM-ResourceSet IE.

As one embodiment, the first signaling comprises part or all of fields in a CSI-SSB-ResourceSet IE.

As one embodiment, the first signaling comprises part or all of fields in a CSI-SSB-ResourceSetId IE.

As one embodiment, the first signaling comprises part or all of fields in a CSI-ResourceConfig IE.

As one embodiment, the first signaling comprises part or all of fields in a CSI-RS-ResourceConfigMobility IE.

As one embodiment, the first signaling is used for indicating the first reference signal resource.

As one embodiment, the first signaling is used for indicating a first reference signal resource set, and the first reference signal resource set comprises the first reference signal resource.

As one sub-embodiment of the above embodiment, the first signaling is used for indicating an index of the first reference signal resource set.

As one sub-embodiment of the above embodiment, the first signaling is used for indicating a configuration index of the first reference signal resource set.

As one sub-embodiment of the above embodiment, the first signaling is used for indicating an identifier of the first reference signal resource set.

As one embodiment, the first signaling comprises part or all of fields in a CSI-ReportConfig IE.

As one embodiment, the first signaling comprises part or all of fields in a CSI-AperiodicTriggerStateList IE.

As one embodiment, the first signaling comprises part or all of fields in a CSI-AperiodicTriggerState IE.

As one embodiment, the first signaling comprises part or all of fields in a CSI-AssociatedReportConfigInfo IE.

As one embodiment, the first signaling comprises part or all of fields in an SCellActivationRS-Config-r17 IE.

As one embodiment, the first signaling comprises part or all of fields in a CSI-SemiPersistentOnPUSCH-TriggerStateList IE.

As one embodiment, the first signaling comprises part or all of fields in a CSI-SemiPersistentOnPUSCH-TriggerState IE.

As one embodiment, the name of RRC signaling used for carrying the first signaling comprises "CSI".

As one embodiment, the name of RRC signaling used for carrying the first signaling comprises "CSI-RS".

As one embodiment, the name of RRC signaling used for carrying the first signaling comprises "Report".

As one embodiment, the name of RRC signaling used for carrying the first signaling comprises "Resource".

As one embodiment, the first reference signal resource occupies at least one RE (Resource Element).

Typically, one RE occupies one symbol in a time domain, and occupies one subcarrier in a frequency domain.

As one embodiment, the symbol is an SC-FDMA (Single-Carrier Frequency Division Multiple Access) symbol.

As one embodiment, the symbol is an IFDMA (Interleaved Frequency Division Multiple Access) symbol.

As one embodiment, the symbol is an FBMC (Filter Bank Multi Carrier) symbol.

As one embodiment, the symbol is an OFDM (Orthogonal Frequency Division Multiplexing) symbol.

As one embodiment, the symbol is an OFDM symbol containing a CP (Cyclic Prefix).

As one embodiment, the symbol is a DFT-S-OFDM (Discrete Fourier Transform Spreading OFDM) symbol containing a CP.

As one embodiment, the symbol is obtained after an output of transform precoding undergoes OFDM symbol generation.

As one embodiment, the first reference signal resource comprises at least one symbol in one slot in a time domain.

As one embodiment, the first reference signal resource comprises a plurality of symbols in one slot in a time domain.

As one embodiment, the first reference signal resource comprises a plurality of slots in a time domain.

As one embodiment, the first reference signal resource comprises a plurality of subframes in a time domain.

As one embodiment, the first reference signal resource comprises at least one sub-band in a frequency domain.

As one embodiment, the first reference signal resource comprises at least one RB (Resource Block) in a frequency domain.

As one embodiment, the first reference signal resource comprises one group of downlink PRBs (Physical RBs).

As one embodiment, the RB in the present application comprises a PRB.

As one embodiment, the RB in the present application refers to a PRB.

As one embodiment, the RB in the present application comprises 12 consecutive subcarriers in a frequency domain.

As one embodiment, the first reference signal resource comprises a CSI-RS (Channel State Information-Reference Signal) resource.

As one embodiment, the first reference signal resource is one CSI-RS resource.

As one embodiment, the first reference signal resource is one CSI-RS resource set.

As one embodiment, the first reference signal resource is one NZP (non-zero-power) CSI-RS resource.

As one embodiment, the first reference signal resource is one NZP CSI-RS resource set.

As one embodiment, the first reference signal resource is associated with 1 NZP-CSI-RS-ResourceId.

As one embodiment, the first reference signal resource is associated with 1 NZP-CSI-RS-ResourceSet.

As one embodiment, the first reference signal resource is associated with 1 NZP-CSI-RS-ResourceSetId.

As one embodiment, the first reference signal resource comprises an SSB.

As one embodiment, the first reference signal resource is one SSB resource.

As one embodiment, the first reference signal resource is associated with 1 SSB-Index.

As one embodiment, the first reference signal resource is associated with 1 CSI-ReportConfigId.

As one embodiment, the first reference signal resource is associated with 1 CSI-ResourceConfigId.

As one embodiment, the first reference signal resource comprises one or more ports.

As one sub-embodiment of the above embodiment, the one or more ports comprised in the first reference signal resource is/are respectively CSI-RS port(s).

As one sub-embodiment of the above embodiment, the one or more ports comprised in the first reference signal resource is/are respectively antenna port(s).

As one embodiment, the first reference signal resource comprises a reference signal.

As one embodiment, the first reference signal resource comprises a reference signal transmitted in the first reference signal resource.

As one embodiment, the first reference signal comprises a downlink reference signal.

As one embodiment, the first reference signal comprises a CSI-RS.

As one embodiment, the first reference signal comprises an SSB.

As one embodiment, the first reference signal comprises a PTRS (Phase-Tracking Reference Signal).

As one embodiment, the first reference signal comprises a DMRS (DeModulation Reference Signal).

As one embodiment, the first reference signal comprises a TRS (Tracking Reference Signal).

As one embodiment, the meaning of receiving a first reference signal on a first reference signal resource includes: receiving the first reference signal in REs (Resource Elements) corresponding to the first reference signal resource.

As one embodiment, the meaning of receiving a first reference signal on a first reference signal resource includes: receiving the first reference signal according to a power control parameter configured to the first reference signal resource.

As one embodiment, the meaning of receiving a first reference signal on a first reference signal resource includes: determining RSRP of the first reference signal according to a power control parameter configured to the first reference signal resource.

As one embodiment, the meaning of receiving a first reference signal on a first reference signal resource includes: determining RSRQ of the first reference signal according to a power control parameter configured to the first reference signal resource.

As one embodiment, the meaning of receiving a first reference signal on a first reference signal resource includes: determining SINR of the first reference signal according to a power control parameter configured to the first reference signal resource.

As one embodiment, the power control parameter configured to the first reference signal resource includes the first candidate offset.

As one embodiment, the meaning of receiving a first reference signal on the first reference signal resource includes: receiving the first reference signal according to a QCL parameter configured to the first reference signal resource.

As one embodiment, types of the QCL parameter include TypeA, TypeB, TypeC, and TypeD.

As one embodiment, a QCL parameter with the type of TypeA includes Doppler shift, Doppler spread, average delay, and delay spread; a QCL parameter with the type of TypeB includes Doppler shift and Doppler spread; a QCL parameter with the type of TypeC includes Doppler shift and average delay; and a QCL parameter with the type of TypeD includes a spatial reception parameter.

As one embodiment, specific definitions of the TypeA, the TypeB, the TypeC and the TypeD can be seen in Section 5.1.5 of 3GPP TS38.214.

As one embodiment, the first signaling is used for configuring the first reference signal.

As one embodiment, the first signaling is used for indicating the first reference signal.

As one embodiment, the first signaling is used for determining configuration information of the first reference signal.

As one sub-embodiment of the above embodiment, the configuration information of the first reference signal is configuration information of the first reference signal resource.

As one embodiment, the first reference signal is transmitted according to configuration information of the first reference signal resource.

As one embodiment, the first reference signal is transmitted in one occurrence of the first reference signal resource in a time domain.

As one embodiment, the first reference signal is based on one reference signal transmission of configuration information of the first reference signal resource.

As one embodiment, the measurement for the first reference signal includes channel measurement.

As one embodiment, the measurement for the first reference signal includes interference measurement (IM).

As one embodiment, the measurement for the first reference signal includes Layer 1 (L1) measurement.

As one embodiment, the measurement for the first reference signal includes Layer 3 (L3) measurement.

As one embodiment, the measurement for the first reference signal is used for generating CSI.

As one embodiment, the measurement for the first reference signal is used for generating a measurement report.

As one embodiment, the measurement for the first reference signal is used for mobility management.

As one embodiment, the measurement for the first reference signal is used for cell selection or reselection.

As one embodiment, the first channel information includes a baseband signal.

As one embodiment, the first channel information includes a radio frequency signal.

As one embodiment, the first channel information includes a wireless signal.

As one embodiment, the first channel information includes CSI.

As one embodiment, the first channel information includes a measurement report.

As one embodiment, the first channel information includes a result of cell selection.

As one embodiment, the first channel information includes a result of BFR (Beam Failure Recovery).

As one embodiment, the first channel information includes a report for mobility management.

As one embodiment, the first channel information includes CSI corresponding to one or more CSI types in the first CSI type set.

As one embodiment, the first channel information includes a CSI report corresponding to one or more CSI types in the first CSI type set.

As one embodiment, the first channel information includes periodic CSI.

As one embodiment, the first channel information includes semi-persistent (SP) CSI.

As one embodiment, the first channel information includes aperiodic (AP) CSI.

As one embodiment, sending power of the first reference signal includes an EPRE (Energy Per Resource Element) of the first reference signal.

As one embodiment, sending power of the first reference signal includes a power value of the first reference signal on one resource element.

As one embodiment, the unit of sending power of the first reference signal is dBm (deciBel relative to one milliwatt).

As one embodiment, the unit of sending power of the first reference signal is milliwatt.

As one embodiment, the unit of sending power of the first reference signal is dB (deciBel).

As one embodiment, the broadcast signal comprises an SS (Synchronization Signal).

As one embodiment, the broadcast signal comprises a PSS (Primary Synchronization Signal).

As one embodiment, the broadcast signal comprises an SSS (Secondary Synchronization Signal).

As one embodiment, the broadcast signal comprises a PSS and an SSS.

As one embodiment, the broadcast signal comprises a PBCH (Physical Broadcast CHannel).

As one embodiment, the broadcast signal comprises an SSB.

As one embodiment, the broadcast signal comprises an SIB.

As one embodiment, the broadcast signal is an SS.

As one embodiment, the broadcast signal is a PSS.

As one embodiment, the broadcast signal is an SSS.

As one embodiment, the broadcast signal is a PBCH.

Typically, reception occasions of the PBCH, PSS, and SSS are in consecutive symbols, and form one SS/PBCH block.

As one embodiment, SSS, PBCH DMRS, and PBCH data in the one SS/PBCH block has an identical EPRE, and is indicated by *ss-PBCH-BlockPower.*

As one embodiment, SSS, PBCH DMRS, and PBCH data in the one SS/PBCH block has an identical EPRE, and is indicated by *ss-PBCH-BlockPower-r17.*

As one embodiment, a ratio of an EPRE of a PSS to an EPRE of an SSS in the one SS/PBCH block is equal to 0 dB.

As one embodiment, a ratio of an EPRE of a PSS to an EPRE of an SSS in the one SS/PBCH block is equal to 3 dB.

As one embodiment, the SSB in the present application refers to: an SS/PBCH block.

As one embodiment, the SSB in the present application refers to: a Synchronization Signal/Physical broadcast channel block.

As one embodiment, the SSB in the present application refers to: a Synchronization Signal Block.

As one embodiment, the first reference signal and the broadcast signal are Quasi Co-Located (QCLed).

As one embodiment, sending power of the broadcast signal includes an EPRE of the broadcast signal.

As one embodiment, sending power of the broadcast signal includes a power value of the broadcast signal on one resource element.

As one embodiment, sending power of the broadcast signal is indicated by *ss-PBCH-BlockPower.*

As one embodiment, sending power of the broadcast signal is indicated by *ss-PBCH-BlockPower-r17.*

As one embodiment, the unit of sending power of the broadcast signal is dBm.

As one embodiment, the unit of sending power of the broadcast signal is milliwatt.

As one embodiment, the unit of sending power of the broadcast signal is dB.

As one embodiment, the power offset is a real number.

As one embodiment, the candidate offset is an integer.

As one embodiment, the power offset is equal to one of -6, -3, 0, 3, and 6.

As one embodiment, the unit of the power offset is dB.

As one embodiment, the plurality of candidate offsets correspond to K1 candidate offsets, and K1 is a positive integer greater than 1.

As one sub-embodiment of this embodiment, the K1 candidate offsets are respectively associated with K1 CSI type sets.

As one embodiment, the plurality of power offsets comprise and only comprise 2 power offsets.

As one embodiment, the number of power offsets comprised in the plurality of power offsets is configurable.

As one embodiment, the unit of the first candidate offset is dB.

As one embodiment, the first candidate offset is a linear value.

As one embodiment, the first candidate offset is used for determining sending power of the first reference signal resource.

As one embodiment, the first candidate offset and sending power of the broadcast signal are jointly used for determining sending power of the first reference signal resource.

As one embodiment, sending power of the first reference signal resource is defined as a linear average value of power contribution of an RE carrying a configured RS within an operating system bandwidth.

As one embodiment, each of the plurality of candidate offsets is associated with one CSI type set.

As one embodiment, the plurality of candidate offsets include two candidate offsets, and the two candidate offsets are respectively associated with different CSI type sets.

As one embodiment, the plurality of candidate offsets include more than 2 candidate offsets, and the more than 2 candidate offsets are respectively associated with different CSI type sets.

As one embodiment, the one CSI type set corresponds to one of the plurality of candidate offsets; and there are two CSI type sets corresponding to one identical candidate offset in the plurality of candidate offset sets.

As one embodiment, the CSI type set comprises a CSI type for i1.

As one embodiment, the CSI type set comprises a CSI type corresponding to a CSI report for a first-level codebook in a two-level codebook.

As one embodiment, the CSI type set comprises a CSI type corresponding to a CSI report of a first-level codebook.

As one embodiment, the CSI type set comprises one CSI type.

As one embodiment, the CSI type set comprises a plurality of CSI types.

As one embodiment, the CSI type set comprises an SSB-Index.

As one embodiment, the CSI type set comprises an SSBRI (SSB Resource Indicator).

As one embodiment, the CSI type set comprises an SINR (Signal to Noise and Interference Ratio).

As one embodiment, the CSI type set comprises an L1-SINR (Layer 1 SINR).

As one embodiment, the CSI type set comprises a Capability Index.

As one embodiment, the CSI type set comprises a Capability Set Index.

As one embodiment, the CSI type is at least one of an L1-RSRP, a CRI, an RI, a PMI, a CQI, and an LI.

As one embodiment, the CSI type is at least one of an SSB-Index, an SSBRI, an SINR, an L1-SINR, a Capability Index, and a Capability Set Index.

As one embodiment, the CSI type set is a combination of one or more CSI types, and the CSI type is at least one of an L1-RSRP, a CRI, an RI, a PMI, a CQI, an LI, an SSB-Index, an SSBRI, an SINR, an L1-SINR, a Capability Index, and a Capability Set Index.

As one embodiment, the power offset of the sending power of the first reference signal with respect to the sending power of the SSB depends on a CSI type corresponding to the first channel information.

As one embodiment, the plurality of candidate offsets are associated with a plurality of CSI type sets, and the first CSI type set is a CSI type set among the plurality of CSI type sets, with which the first candidate offset is associated.

As one embodiment, a CSI type corresponding to the first channel information is indicated by downlink signaling.

As one embodiment, the first node determines, by itself, a CSI type corresponding to the first channel information.

### Embodiment 2

Embodiment 2 illustrates a schematic diagram of a network architecture according to one embodiment of the present application, as shown in FIG. 2.

FIG. 2 illustrates a network architecture of LTE (Long-Term Evolution), LTE-A (Long-Term Evolution Advanced) and future 5G systems. The network architecture of the LTE, LTE-A and future 5G systems is referred to as an EPS (Evolved Packet System). The 5G NR or LTE network architecture may be referred to as a 5GS (5G system)/EPS 200 or some other suitable terminologies. The 5GS/EPS 200 may comprise one or more pieces of UE 201, one piece of UE 241 performing sidelink communication with the UE 201, an NG-RAN (Next Generation Radio Access Network) 202, a 5G-CN (5G Core Network)/EPC (Evolved Packet Core) 210, an HSS (Home Subscriber Server)/UDM (Unified Data Management) 220 and an Internet service 230. The 5GS/EPS 200 may be interconnected with other access networks, but these entities/interfaces are not shown for simplicity. As shown in FIG. 2, the 5GS/EPS 200 provides a packet switching service, however, those skilled in the art will readily appreciate that the various concepts presented throughout the present application may be extended to networks providing circuit switching services. The NG-RAN 202 comprises an NR Node B (gNB) 203 and other gNB 204. The gNB 203 provides user and control plane protocol termination towards the UE 201. The gNB 203 may be connected to the other gNB 204 via an Xn interface (e.g., backhaul). The gNB 203 may also be referred to as a base station, a base transceiving station, a radio base station, a radio transceiving device, a transceiving device function, a basic service set (BSS), an extended service set (ESS), a TRP (Transmitter Receiver Point), or some other suitable terminologies. The gNB 203 provides an access point to the 5G-CN/EPC 210 for the UE 201. Instances of the UE 201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatuses. Those skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB 203 is connected to a 5G-CN/EPC 210 through an S1/NG interface. The 5G-CN/EPC 210 comprises an MME (Mobility Management Entity)/AMF (Authentication Management Field)/SMF (Session Management Function) 211, other MME/AMF/SMF 214, an S-GW (Service Gateway)/UPF (User Plane Function) 212, and a P-GW (Packet Data Network Gateway)/UPF 213. The MME/AMF/SMF 211 is a control node that handles signaling between the UE 201 and the 5G-CN/EPC 210. Generally, the MME/AMF/SMF 211 provides bearer and connection management. All user IP (Internet Protocol) packets are transmitted through the S-GW/UPF 212, and the S-GW/UPF 212 itself is connected to the P-GW/UPF 213. The P-GW provides UE IP address allocation and other functions. The P-GW/UPF 213 is connected to the Internet service 230. The Internet service 230 comprises operator-corresponding Internet protocol services, which may specifically comprise Internet, Intranet, an IMS (IP Multimedia Subsystem) and packet switching services.

As one embodiment, the first node in the present application comprises the UE 201.

As one embodiment, the second node in the present application comprises the gNB 203.

As one embodiment, the UE 201 supports relay transmission.

As one embodiment, the UE 201 comprises a mobile phone.

As one embodiment, the UE 201 is a means of transportation comprising an automobile.

As one embodiment, the gNB 203 is a Macro Cell base station.

As one embodiment, the gNB 203 is a Micro Cell base station.

As one embodiment, the gNB 203 is a Pico Cell base station.

As one embodiment, the gNB 203 is a Femtocell.

As one embodiment, the gNB 203 is a base station device supporting a large-latency difference.

As one embodiment, the gNB 203 is one flying platform device.

As one embodiment, the gNB 203 is a satellite device.

As one embodiment, the gNB 203 is a test device (such as a transceiving apparatus that simulates some functions of a base station, and a signaling tester).

As one embodiment, a wireless link from the UE 201 to the gNB 203 is an uplink, the uplink being used for performing uplink transmission.

As one embodiment, a wireless link from the gNB 203 to the UE 201 is a downlink, the downlink being used for performing downlink transmission.

As one embodiment, a wireless link between the UE 201 and the gNB 203 comprises a cellular network link.

As one embodiment, the UE 201 and the gNB 203 are connected via a Uu air interface.

As one embodiment, a sender of the first signaling comprises the gNB 203.

As one embodiment, a recipient of the first signaling comprises the UE 201.

As one embodiment, a sender of the first reference signal comprises the gNB 203.

As one embodiment, a recipient of the first reference signal comprises the UE 201.

As one embodiment, a sender of the first channel information comprises the UE 201.

As one embodiment, a recipient of the first channel information comprises the gNB 203.

As one embodiment, a sender of the target signaling comprises the gNB 203.

As one embodiment, a recipient of the target signaling comprises the UE 201.

As one embodiment, the UE 201 supports generating a report using AI/ML.

As one embodiment, the UE 201 supports generating a trained model or partial parameters in a model using training data.

As one embodiment, the UE 201 supports determining at least partial parameters for CSI feedback enhancement through training.

As one embodiment, the UE 201 supports CSI feedback enhancement based on AI/ML.

As one embodiment, the UE 201 supports CSI feedback enhancement based on CNNs (Convolutional Neural Networks).

As one embodiment, the UE 201 supports CSI feedback enhancement based on a Transformer.

As one embodiment, the UE 201 supports CSI feedback enhancement based on a ResNet (Residual Network).

### Embodiment 3

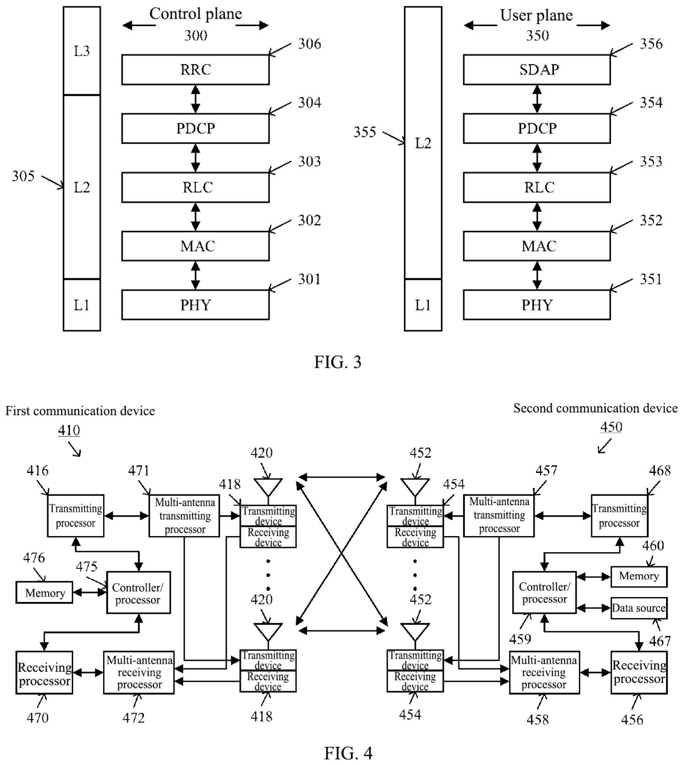

Embodiment 3 illustrates a schematic diagram of an embodiment of a wireless protocol architecture of a user plane and a control plane according to one embodiment of the present application, as shown in FIG. 3.

FIG. 3 is a schematic diagram illustrating an embodiment of a radio protocol architecture for a user plane 350 and a control plane 300, and FIG. 3 shows a radio protocol architecture for the control plane 300 between a first communication node device (UE or an RSU (Road Side Unit) in V2X (Vehicle to Everything), a vehicle-mounted device or a vehicle-mounted communication module) and a second node device (a gNB, UE or an RSU in V2X, a vehicle-mounted device or a vehicle-mounted communication module), or between two pieces of UE using three layers: Layer 1 (L1), Layer 2 (L2) and Layer 3 (L3). The L1 is a lowest layer and implements various physical layer (PHY) signal processing functions. L1 will be referred to as PHY 301 herein. The L2 305 is above the PHY 301, and is responsible for links between a first node device and a second node device or between two pieces of UE through the PHY 301. The L2 305 comprises a MAC sublayer 302, an RLC (Radio Link Control) sublayer 303 and a PDCP (Packet Data Convergence Protocol) sublayer 304, and these sublayers terminate at the second node device. The PDCP sublayer 304 provides multiplexing between different radio bearers and logical channels. The PDCP sublayer 304 also provides security by encrypting data packets, and provides handover mobility support for the first communication node device between second communication node devices. The RLC sublayer 303 provides segmentation and reassembling of upper layer data packets, retransmission of lost data packets, and reordering of data packets to compensate for out-of-order reception due to HARQ. The MAC sublayer 302 provides multiplexing between logical and transport channels. The MAC sublayer 302 is also responsible for allocating various radio resources (e.g., resource blocks) in one cell between first communication node devices. The MAC sublayer 302 is also responsible for HARQ operations. An RRC sublayer 306 in L3 in the control plane 300 is responsible for obtaining radio resources (i.e., radio bearers) and configuring lower layers using RRC signaling between the second communication node device and the first communication node device. The radio protocol architecture for the user plane 350 comprises Layer 1 (L1) and Layer 2 (L2). The radio protocol architecture for the first communication node device and the second communication node device in the user plane 350 is substantially the same as the corresponding layers and sublayers in the control plane 300 for a physical layer 351, a PDCP sublayer 354 in L2 355, an RLC sublayer 353 in L2 355, and a MAC sublayer 352 in L2 355, but the PDCP sublayer 354 also provides header compression for upper layer data packets to reduce radio transmission overhead. The L2 355 in the user plane 350 also comprises an SDAP (Service Data Adaptation Protocol) sublayer 356, and the SDAP sublayer 356 is responsible for mapping between QoS (Quality of Service) streams and data radio bearers (DRBs) to support the diversity of services. Although not shown in the figure, the first communication node device may have several upper layers above the L2 355, comprising a network layer (e.g., IP layer) terminated at the P-GW on a network side and an application layer terminated at the other end (e.g., remote UE, servers, etc.) of connection.

As one embodiment, the wireless protocol architecture in FIG. 3 is applicable to the first node in the present application.

As one embodiment, the wireless protocol architecture in FIG. 3 is applicable to the second node in the present application.

As one embodiment, the first signaling is generated in the RRC sublayer 306.

As one embodiment, the first signaling is generated in the MAC sublayer 302 or the MAC sublayer 352.

As one embodiment, the target signaling is generated in the PHY 301 or the PHY 351.

As one embodiment, the target signaling is generated in the MAC sublayer 302.

As one embodiment, the higher layer in the present application refers to a layer above the physical layer.

As one embodiment, the higher layer in the present application comprises a MAC layer.

As one embodiment, the higher layer in the present application comprises an RRC layer.

### Embodiment 4

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In the transmission from the first communication device 410 to the second communication device 450, at the first communication device 410, upper layer data packets from a core network are provided to the controller/processor 475. The controller/processor 475 implements functionality of L2. In a DL, the controller/processor 475 provides header compression, encryption, packet segmentation and reordering, multiplexing between logical and transport channels, and radio resource allocation to the second communication device 450 based on various priority metrics. The controller/processor 475 is also responsible for HARQ operations, retransmission of lost packets, and signaling to the second communication device 450. The transmitting processor 416 and the multi-antenna transmitting processor 471 implement various signal processing functions for L1 (i.e., physical layer). The transmitting processor 416 implements coding and interlacing to facilitate forward error correction (FEC) at the second communication device 450, as well as mapping of signal clustering based on various modulation schemes (e.g., binary phase shift keying (BPSK), quadrature phase shift keying (QPSK), M-PSK, and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more parallel streams. The transmitting processor 416 then maps each parallel stream to a subcarrier, multiplexes a modulated symbol with a reference signal (e.g., pilot) in a time domain and/or frequency domain, and then uses inverse fast Fourier transform (IFFT) to generate a physical channel carrying a time-domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides it to different antennas 420.

In the transmission from the first communication device 410 to the second communication device 450, at the second communication device 450, each receiving device 454 receives a signal through its corresponding antenna 452. Each receiving device 454 recovers information modulated onto a radio frequency carrier, converts the radio frequency stream into a baseband multi-carrier symbol stream and provides it to the receiving processor 456. The receiving processor 456 and the multi-antenna receiving processor 458 implement various signal processing functions of L1. The multi-antenna receiving processor 458 performs a receiving analog precoding/beamforming operation on the baseband multi-carrier symbol stream from the receiving device 454. The receiving processor 456 uses fast Fourier transform (FFT) to convert the baseband multi-carrier symbol stream after the receiving analog precoding/beamforming operation from a time domain to a frequency domain. In the frequency domain, a data signal and a reference signal of a physical layer are demultiplexed by the receiving processor 456, wherein the reference signal will be used for channel estimation, and the data signal is recovered after multi-antenna detection in the multi-antenna receiving processor 458 into any parallel stream destined for the second communication device 450. Symbols on each parallel stream are demodulated and recovered in the receiving processor 456, and soft decisions are generated. The receiving processor 456 then decodes and deinterlaces the soft decisions to recover upper layer data and control signals transmitted by the first communication device 410 on the physical channel. The upper layer data and control signals are then provided to the controller/processor 459. The controller/processor 459 implements functions of L2. The controller/processor 459 may be associated with a memory 460 storing program codes and data. The memory 460 may be referred to as a computer-readable medium. In a DL, the controller/processor 459 provides demultiplexing between transport and logical channels, packet reassembly, decryption, header decompression, and control signal processing to recover upper layer data packets from the core network. The upper layer data packets are then provided to all protocol layers above L2. Various control signals may also be provided to L3 for L3 processing. The controller/processor 459 is also responsible for error detection using an Acknowledgement (ACK) and/or Negative Acknowledgement (NACK) protocol to support the HARQ operations.

In the transmission from the second communication device 450 to the first communication device 410, at the second communication device 450, the data source 467 is used to provide upper layer data packets to the controller/processor 459. The data source 467 represents all protocol layers above L2. Similar to sending functions at the first communication device 410 described in a DL, the controller/processor 459 implements header compression, encryption, packet segmentation and reordering, and multiplexing between logical and transport channels based on wireless resource allocation of the first communication device 410, and implements L2 functions for the user plane and the control plane. The controller/processor 459 is also responsible for HARQ operations, retransmission of lost packets, and signaling to the first communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates a generated parallel stream into a multi-carrier/single-carrier symbol stream, which is provided to different antennas 452 via the transmitting device 454 after analog precoding/beamforming operations in the multi-antenna transmitting processor 457. Each transmitting device 454 first converts a baseband symbol stream provided by the multi-antenna transmitting processor 457 into a radio frequency symbol stream, and then provides it to the antenna 452.

In the transmission from the second communication device 450 to the first communication device 410, functions at the first communication device 410 are similar to receiving functions at the second communication device 450 described in transmission from the first communication device 410 to the second communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of L1. The controller/processor 475 implements functions of L2. The controller/processor 475 may be associated with the memory 476 storing program codes and data. The memory 476 may be referred to as a computer-readable medium. The controller/processor 475 provides demultiplexing between transport and logical channels, packet reassembly, decryption, header decompression, and control signal processing to recover upper layer data packets from the second communication device 450. The upper layer data packets from the controller/processor 475 may be provided to the core network. The controller/processor 475 is also responsible for error detection using ACK and/or NACK protocols to support the HARQ operations.

As one embodiment, the second communication device 450 comprises: at least one processor and at least one memory, the at least one memory comprising a computer program code; and the at least one memory and the computer program code are configured to be used together with the at least one processor. The second communication device 450 apparatus at least receives first signaling, wherein the first signaling is used for configuring a first reference signal resource; receives a first reference signal in the first reference signal resource; and sends first channel information; measurement for the first reference signal is used for generating the first channel information, and a power offset of sending power of the first reference signal with respect to sending power of a broadcast signal is a first candidate offset among a plurality of candidate offsets; each of the plurality of candidate offsets is associated with one CSI type set, and the one CSI type set comprises at least one CSI type; candidates of the CSI type comprise at least one of an L1-RSRP, a CRI, an RI, a PMI, a CQI, and an LI; the first candidate offset is a candidate offset, among the plurality of candidate offsets, associated with a first CSI type set; and the first channel information corresponds to one or more CSI types in the first CSI type set.

As one embodiment, the second communication device 450 comprises: a memory storing a computer-readable instruction program, wherein the computer-readable instruction program generates actions when executed by at least one processor, and the actions comprise: receiving first signaling; receiving a first reference signal in a first reference signal resource; and sending first channel information.

As one embodiment, the first communication device 410 comprises: at least one processor and at least one memory, the at least one memory comprising a computer program code; and the at least one memory and the computer program code are configured to be used together with the at least one processor. The first communication device 410 apparatus at least sends first signaling, the first signaling being used for configuring a first reference signal resource; sends a first reference signal in the first reference signal resource; and receives first channel information; measurement for the first reference signal is used for generating the first channel information, and a power offset of sending power of the first reference signal with respect to sending power of a broadcast signal is a first candidate offset among a plurality of candidate offsets; each of the plurality of candidate offsets is associated with one CSI type set, and the one CSI type set comprises at least one CSI type; candidates of the CSI type comprise at least one of an L1-RSRP, a CRI, an RI, a PMI, a CQI, and an LI; and the first candidate offset is a candidate offset, among the plurality of candidate offsets, associated with a first CSI type set; and the first channel information corresponds to one or more CSI types in the first CSI type set.

As one embodiment, the first communication device 410 comprises: a memory storing a computer-readable instruction program, the computer-readable instruction program generates actions when executed by at least one processor, and the actions comprise: sending the first signaling; sending the first reference signal in the first reference signal resource set; and receiving the first channel information.

As one embodiment, the first node in the present application comprises the second communication device 450.

As one embodiment, the second node in the present application comprises the first communication device 410.

As one embodiment, at least one of {the antenna 420, the transmitting device 418, the transmitting processor 416, the multi-antenna transmitting processor 471, the controller/processor 475, and the memory 476} is used for sending the first signaling; and at least one of {the antenna 452, the receiving device 454, the receiving processor 456, the multi-antenna receiving processor 458, the controller/processor 459, the memory 460, and the data source 467} is used for receiving the first signaling.

As one embodiment, at least one of {the antenna 420, the transmitting device 418, the transmitting processor 416, the multi-antenna transmitting processor 471, the controller/processor 475, and the memory 476} is used for sending the first reference signal in the first reference signal resource; and at least one of {the antenna 452, the receiving device 454, the receiving processor 456, the multi-antenna receiving processor 458, the controller/processor 459, the memory 460, and the data source 467} is used for receiving the first reference signal in the first reference signal resource.

As one embodiment, at least one of {the antenna 452, the transmitting device 454, the transmitting processor 468, the multi-antenna transmitting processor 457, the controller/processor 459, the memory 460, and the data source 467} is used for sending the first channel information; and at least one of {the antenna 420, the receiving device 418, the receiving processor 470, the multi-antenna receiving processor 472, the controller/processor 475, and the memory 476} is used for receiving the first channel information.

### Embodiment 5

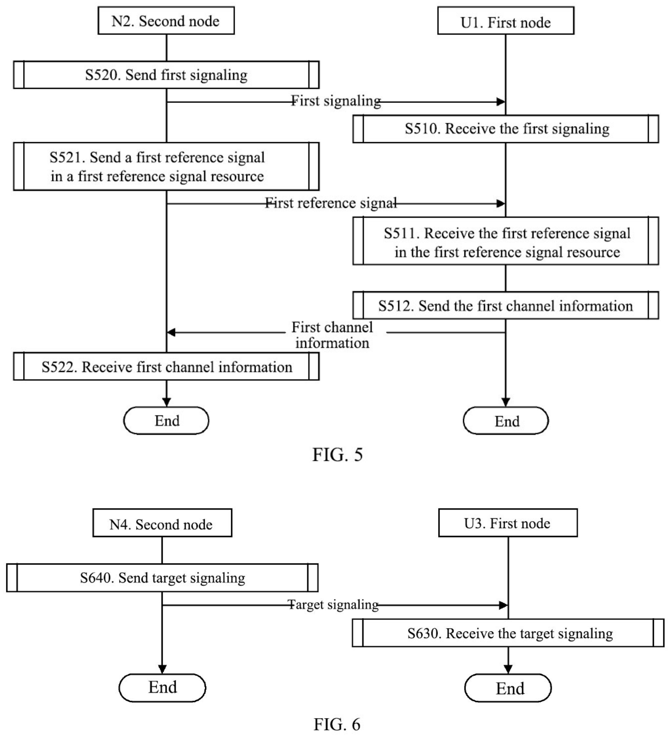

Embodiment 5 illustrates a first flowchart of transmission between a first node and a second node according to one embodiment of the present application. In FIG. 5, a first node U1 communicates with a second node N2 through a wireless link. It is particularly noted that the order in this embodiment does not limit the signal transmission order and implementation order in the present application. In the case of no conflict, embodiments, sub-embodiments and subsidiary embodiments in Embodiment 5 can be applied to Embodiment 6; and conversely, in the case of no conflict, any embodiment, sub-embodiment and subsidiary embodiment in Embodiment 6 can be applied to Embodiment 5.

For **the first node U1,** first signaling is received in step S510; a first reference signal is received in a first reference signal resource in step S511; and first channel information is sent in step S512.

For **the second node N2,** first signaling is sent in step S520; a first reference signal is sent in a first reference signal resource in step S512; and first channel information is received in step S522.

In Embodiment 5, first signaling is received, the first signaling being used for configuring a first reference signal resource; a first reference signal is received in the first reference signal resource; first channel information is sent; measurement for the first reference signal is used for generating the first channel information; a power offset of sending power of the first reference signal with respect to sending power of a broadcast signal is a first candidate offset among a plurality of candidate offsets; each of the plurality of candidate offsets is associated with one CSI type set, and the one CSI type set comprises at least one CSI type; candidates of the CSI type comprise at least one of an L1-RSRP, a CRI, an RI, a PMI, a CQI, and an LI; the first candidate offset is a candidate offset, among the plurality of candidate offsets, associated with a first CSI type set; and the first channel information corresponds to one or more CSI types in the first CSI type set.

As one embodiment, the first node U1 is the first node in the present application.

As one embodiment, the second node N2 is the second node in the present application.

As one embodiment, an air interface between the second node N2 and the first node U1 comprises a wireless interface between a base station device and user equipment.

As one embodiment, an air interface between the second node N2 and the first node U1 comprises a wireless interface between a relay node device and user equipment.

As one embodiment, an air interface between the second node N2 and the first node U1 comprises a wireless interface between user equipment and user equipment.

As one embodiment, the first reference signal resource is a periodic CSI-RS resource; and the first channel information is a report of periodic CSI.

As one embodiment, the first reference signal resource is a periodic CSI-RS resource; and the first channel information is a report of semi-persistent CSI.

As one embodiment, the first reference signal resource is a semi-persistent CSI-RS resource, and the first channel information is a report of semi-persistent CSI.

As one embodiment, the first signaling is transmitted on a downlink physical data channel (i.e., a downlink channel that can be used for carrying physical layer data).

As one embodiment, a physical layer channel occupied by the first signaling comprises a PDSCH (Physical Downlink Shared CHannel).

As one embodiment, the first channel information is transmitted on an uplink physical layer control channel (i.e., an uplink channel that can be used for carrying physical layer signaling).

As one embodiment, a physical layer channel occupied by the first channel information comprises a PUCCH (Physical Uplink Control CHannel).

### Embodiment 6

Embodiment 6 illustrates a second flowchart of transmission between a first node and a second node according to one embodiment of the present application. In FIG. 6, a first node U3 communicates with a second node N4 through a wireless link. It is particularly noted that the order in this embodiment does not limit the signal transmission order and implementation order in the present application. In the case of no conflict, embodiments, sub-embodiments and subsidiary embodiments in Embodiment 5 can be applied to Embodiment 6; and conversely, in the case of no conflict, any embodiment, sub-embodiment and subsidiary embodiment in Embodiment 6 can be applied to Embodiment 5.

For **the first node U3,** target signaling is received in step S630.

For **the second node N4,** the target signaling is sent in step S630.

In Embodiment 6, the target signaling is used for triggering sending of the first channel information, and CRC included in the target signaling is scrambled through an RNTI other than a C-RNTI.

As one embodiment, the first node U3 is the first node in the present application.

As one embodiment, the second node N4 is the second node in the present application.

As one embodiment, an air interface between the second node N4 and the first node U3 comprises a wireless interface between a base station device and user equipment.

As one embodiment, an air interface between the second node N4 and the first node U3 comprises a wireless interface between a relay node device and user equipment.

As one embodiment, an air interface between the second node N4 and the first node U3 comprises a wireless interface between user equipment and user equipment.

As one embodiment, the RNTI refers to: Radio Network Temporary Identity.

As one embodiment, the C-RNTI refers to: Cell-RNTI.

As one embodiment, the CRC refers to: Cyclic Redundancy Check.

As one embodiment, the target signaling comprises physical layer signaling.

As one embodiment, the target signaling comprises dynamic signaling.

As one embodiment, the target signaling comprises signaling of Layer 1 (L1).

As one embodiment, the target signaling comprises DCI (Downlink Control Information).

As one embodiment, the target signaling comprises one or more fields of DCI.

As one embodiment, the target signaling comprises one piece of DCI.

As one embodiment, the target signaling is used by the second node for triggering reporting of the first channel information.

As one embodiment, the target signaling is used by the second node for triggering the first node to report the first channel information.

As one embodiment, the target signaling indicates a trigger state of the first channel information.

As one embodiment, the target signaling comprises a first field, and the second field of the target signaling is used for triggering sending of the first channel information.

As one sub-embodiment of the above embodiment, the first field of the target signaling comprises a DCI field CSI request.

As one sub-embodiment of the above embodiment, the first field of the target signaling indicates a trigger state of CSI-ReportConfig corresponding to the first channel information.

As one embodiment, the target signaling is one piece of uplink grant (UL grant) signaling.

As one embodiment, the target signaling is used for determining a time domain resource occupied by the first channel information.

As one embodiment, the target signaling comprises a second field, and the second field of the target signaling is used for determining a time domain resource occupied by the first channel information.

As one sub-embodiment of the above embodiment, the second field of the target signaling comprises DCI field time domain resource allocation.

As one sub-embodiment of the above embodiment, the second field of the target signaling is used for determining a slot occupied by the first channel information.

As one embodiment, the target signaling is used for triggering reporting of one piece of aperiodic (AP) CSI.

As one embodiment, the target signaling is used for triggering reporting of one piece of Semi-Persistent CSI.

As one embodiment, the first reference signal resource is a periodic CSI-RS resource; and the first channel information is a report of Semi-Persistent CSI.

As one embodiment, the first reference signal resource is a periodic CSI-RS resource; and the first channel information is a report of AP CSI.

As one embodiment, the first reference signal resource is a Semi-Persistent CSI-RS resource, and the first channel information is a report of Semi-Persistent CSI.

As one embodiment, the first reference signal resource is a Semi-Persistent CSI-RS resource, and the first channel information is a report of AP CSI.

As one embodiment, the first reference signal resource is an AP CSI-RS resource, and the first channel information is a report of AP CSI.

As one sub-embodiment of the above embodiment, the target signaling is used for determining a time domain resource occupied by the first reference signal resource.

As one sub-embodiment of the above embodiment, the step S640 is after the step S520 in Embodiment 5 in the present application.

As one sub-embodiment of the above embodiment, the step S640 is before the step S521 in Embodiment 5 in the present application.

As one sub-embodiment of the above embodiment, the step S630 is after the step S510 in Embodiment 5 in the present application.

As one sub-embodiment of the above embodiment, the step S630 is before the step S511 in Embodiment 5 in the present application.

As one embodiment, an RNTI used for scrambling the CRC included in the target signaling is used for determining a type of the first channel information.

As one embodiment, the target signaling is used for determining a time domain resource occupied by the first channel information.

As one embodiment, an RNTI other than the C-RNTI is a UE-dedicated RNTI.

As one embodiment, an RNTI other than the C-RNTI is an RNTI of a terminal group.

As one embodiment, the name of an RNTI other than the C-RNTI comprises AI.

As one embodiment, the name of an RNTI other than the C-RNTI comprises ML.

As one embodiment, a value of an RNTI used for scrambling CRC included in the target signaling is fixed.

As one embodiment, a value of an RNTI used for scrambling CRC included in the target signaling is configured through RRC signaling.

As one embodiment, the step S640 is before the step S512 in Embodiment 5 in the present application.

As one embodiment, the step S630 is before the step S512 in Embodiment 5 in the present application.

As one embodiment, the step S640 is after the step S520 in Embodiment 5 in the present application.

As one embodiment, the step S630 is after the step S510 in Embodiment 5 in the present application.

As one embodiment, the target signaling is transmitted on a downlink physical layer control channel (i.e., a downlink channel that can only be used for carrying physical layer signaling).

As one embodiment, a physical layer channel occupied by the target signaling comprises a PDCCH (Physical Downlink Control CHannel).

As one embodiment, the first channel information is transmitted on an uplink physical data channel (i.e., an uplink channel that can be used for carrying physical layer data).

As one embodiment, a physical layer channel occupied by the first channel information comprises a PUSCH (Physical Uplink Shared CHannel).

### Embodiment 7

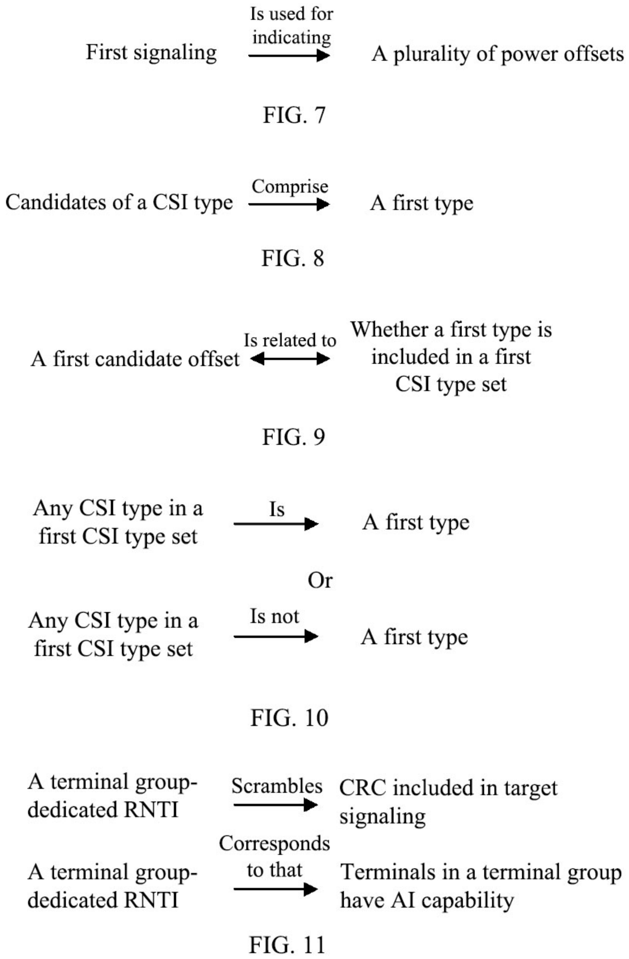

Embodiment 7 illustrates a schematic diagram of first signaling according to one embodiment of the present application, as shown in FIG. 7. In FIG. 7, the first signaling is used for indicating a plurality of power offsets.

As one embodiment, the first signaling is used for indicating a plurality of power offsets.

As one embodiment, the first signaling is used for explicitly indicating the plurality of power offsets.

As one embodiment, the first signaling comprises configuration information of a first reference signal resource set, and the configuration information of the first reference signal resource set comprises the plurality of power offsets.

As one sub-embodiment of the above embodiment, the first reference signal resource set comprises the first reference signal resource.

As one embodiment, the first signaling comprises configuration information of the first reference signal resource, and the configuration information comprises the plurality of power offsets.

As one embodiment, the first signaling is used for implicitly indicating the plurality of power offsets.

As one embodiment, the first signaling is used for indicating an index of a first reference signal resource set, and the first reference signal resource set is used for determining the plurality of power offsets.

As one sub-embodiment of the above embodiment, the first reference signal resource set comprises the first reference signal resource.

As one embodiment, the first signaling is used for indicating a first reference signal resource, and the first reference signal resource is used for determining the plurality of power offsets. As one embodiment, the first signaling is used for simultaneously indicating the plurality of power offsets and a plurality of CSI type sets associated with the plurality of power offsets.

As one embodiment, the first signaling comprises reportQuantity in a CSI-ReportConfig IE.

As one embodiment, the first signaling is used for determining the first CSI type set.

As one embodiment, the first signaling is used for indicating the first CSI type set.

### Embodiment 8

Embodiment 8 illustrates a schematic diagram of a first type according to one embodiment of the present application, as shown in FIG. 8. In FIG. 8, the candidates of the CSI type include a first type, and the first type meets at least one of the following conditions:
channel information recovered by a recipient based on the first type received is unknown to the first node;
a generator for generating the first type is obtained based on training;
and the first type does not belong to CSI defined by 3GPP Rel-17 or a previous version of 3GPP Rel-17.

As one embodiment, the candidates of the CSI type comprise the first type, and channel information recovered by a recipient based on the first type received is unknown to the first node.

As one embodiment, the candidates of the CSI type comprise the first type, and a generator for generating the first type is obtained based on training.

As one embodiment, the candidates of the CSI type comprise the first type, the candidates of the CSI type comprise the first type, and the first type does not belong to CSI defined by 3GPP Rel-17 or a previous version of 3GPP Rel-17.

As one embodiment, the first type meets that generation of CSI corresponding to the first type is based on artificial intelligence/maximum likelihood.

As one embodiment, the first type meets that generation of CSI corresponding to the first type is based on prediction.

As one embodiment, the first type meets that generation of CSI corresponding to the first type is based on model training.

As one embodiment, the first type meets that generation of CSI corresponding to the first type includes channel information compression.

As one embodiment, a name corresponding to the first type comprises AI.

As one embodiment, a name corresponding to the first type comprises ML.

As one embodiment, a name corresponding to the first type comprises AI-Index.

As one embodiment, a name corresponding to the first type comprises Training.

As one embodiment, a name corresponding to the first type comprises Model.

### Embodiment 9

Embodiment 9 illustrates a schematic diagram of a first candidate offset according to one embodiment of the present application, as shown in FIG. 9. In FIG. 9, the first candidate offset is related to whether the first CSI type set comprises the first type.

As one embodiment, the first candidate offset is related to whether the first CSI type set comprises the first type.

As one embodiment, the first CSI type set comprises the first type, and the first candidate offset is equal to a first value; and the first CSI type set does not comprise the first type, and the first candidate offset is equal to a second value.

As one sub-embodiment of this embodiment, the first value is different from the second value.

As one sub-embodiment of this embodiment, the first value is greater than the second value.

As one sub-embodiment of this embodiment, the first value and the second value are both associated with one CSI-RS resource.

As one sub-embodiment of this embodiment, the first value and the second value are both associated with the first reference signal resource.

As one sub-embodiment of this embodiment, the second value is configured through RRC signaling for configuring the first reference signal resource, and the first value is one offset based on the second value.

As one subsidiary embodiment of this sub-embodiment, the RRC signaling for configuring the first reference signal resource includes *powerControlOffsetSS* in an NZP-CSI-RS-resource IE.

As one subsidiary embodiment of this sub-embodiment, the first value is equal to the second value plus the one offset.

As one subsidiary embodiment of this sub-embodiment, the first value is equal to the second value minus the one offset.

### Embodiment 10

Embodiment 10 illustrates a schematic diagram of a first CSI type set according to one embodiment of the present application, as shown in FIG. 10. In FIG. 10, any CSI type in the first CSI type set is the first type, or any CSI type in the first CSI type set is not the first type.

As one embodiment, any CSI type in the first CSI type set is the first type, or any CSI type in the first CSI type set is not the first type.

As one embodiment, the first CSI type set only comprises a first type.

As one embodiment, the first CSI type set does not comprise a first type.

As one embodiment, the first channel information corresponds to one or more CSI types in the first CSI type set, and any CSI type in the one or more CSI types is a first type.

As one embodiment, the first channel information corresponds to one or more CSI types in the first CSI type set, and any CSI type in the one or more CSI types is not a first type.

As one embodiment, the first channel information corresponds to one or more CSI types in the first CSI type set, and any CSI type in the one or more CSI types is a first type. Alternatively, as one embodiment, the first channel information corresponds to one or more CSI types in the first CSI type set, and any CSI type in the one or more CSI types is not the first type.

As one embodiment, a type of the first channel information is used for determining the first candidate offset from a first power offset and a second power offset.

As one sub-embodiment of this embodiment, the type of the first channel information comprises the first type, and the first candidate offset is equal to the first power offset; and the type of the first channel information does not comprise the first type, and the first candidate offset is equal to the second power offset.

As one sub-embodiment of this embodiment, the first power offset is different from the second power offset.

As one sub-embodiment of this embodiment, the first power offset is greater than the second power offset.

As one sub-embodiment of this embodiment, the first power offset and the second power offset are both associated with one CSI-RS resource.

As one sub-embodiment of this embodiment, the first power offset and the second power offset are both associated with the first reference signal resource.

As one sub-embodiment of this embodiment, the second power offset is configured through RRC signaling for configuring the first reference signal resource, and the first power offset is one offset based on the second power offset.

As one subsidiary embodiment of this sub-embodiment, the RRC signaling for configuring the first reference signal resource includes *powerControlOffsetSS* in an NZP-CSI-RS-resource IE.

As one subsidiary embodiment of this sub-embodiment, the first power offset is equal to the second power offset plus the one offset.

As one subsidiary embodiment of this sub-embodiment, the first power offset is equal to the second power offset minus the one offset.

As one embodiment, types of the first channel information include CSI types in the first CSI type set corresponding to the first channel information.

As one embodiment, types of the first channel information include any CSI type in one or more CSI types in the first CSI type set corresponding to the first channel information.

As one embodiment, CRC included in the target signaling is used for determining a type of the first channel information.

### Embodiment 11

Embodiment 11 illustrates a schematic diagram of a terminal group-dedicated RNTI according to one embodiment of the present application, as shown in FIG. 11. In FIG. 11, the CRC included in the target signaling is scrambled through a terminal group-dedicated RNTI, and terminals in a terminal group corresponding to the terminal group-dedicated RNTI have AI capability.

As one embodiment, the CRC included in the target signaling is scrambled through a terminal group-dedicated RNTI, and terminals in a terminal group corresponding to the terminal group-dedicated RNTI have AI capability.

As one embodiment, terminals in a terminal group having AI capability is determined to a network side through a *UEAssistanceInformation* IE.

As one embodiment, terminals in a terminal group having AI capability is determined to a network side through a *UECapabilityInformation* IE.

As one embodiment, the meaning of terminals in a terminal group having AI capability includes: the terminals in the terminal group support that CSI is obtained based on training.

As one embodiment, the meaning of terminals in a terminal group having AI capability includes: the terminals in the terminal group support CSI not defined by 3GPP Rel-17 or a previous version of 3GPP Rel-17.

As one embodiment, the meaning of terminals in a terminal group having AI capability includes: the terminals in the terminal group support that generation of CSI is based on artificial intelligence/maximum likelihood.

As one embodiment, the meaning of terminals in a terminal group having AI capability includes: the terminals in the terminal group support that generation of CSI is based on prediction.

As one embodiment, the meaning of terminals in a terminal group having AI capability includes: the terminals in the terminal group support that generation of CSI is based on model training.

As one embodiment, the meaning of terminals in a terminal group having AI capability includes: the terminals in the terminal group support that generation of CSI includes channel information compression.

### Embodiment 12

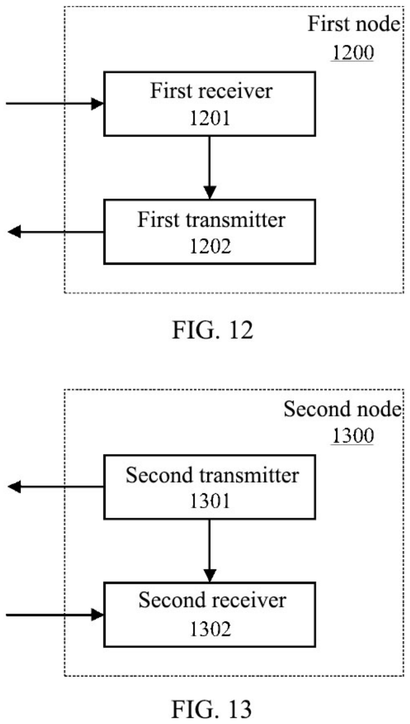

Embodiment 12 illustrates a structural block diagram of a processing apparatus used in a first node according to one embodiment of the present application, as shown in FIG. 12. In FIG. 12, a processing apparatus 1200 in the first node comprises a first receiver 1201 and a first transmitter 1202.

In Embodiment 12, the first receiver 1201 receives first signaling, wherein the first signaling is used for configuring a first reference signal resource; and receives a first reference signal in the first reference signal resource; the first transmitter 1202 sends first channel information; measurement for the first reference signal is used for generating the first channel information, and a power offset of sending power of the first reference signal with respect to sending power of a broadcast signal is a first candidate offset among a plurality of candidate offsets; each of the plurality of candidate offsets is associated with one CSI type set, and the one CSI type set comprises at least one CSI type; candidates of the CSI type comprise at least one of an L1-RSRP, a CRI, an RI, a PMI, a CQI, and an LI; the first candidate offset is a candidate offset, among the plurality of candidate offsets, associated with a first CSI type set; and the first channel information corresponds to one or more CSI types in the first CSI type set.

As one embodiment, the first signaling is used for indicating the plurality of power offsets.

As one embodiment, the candidates of the CSI type comprise a first type, and the first type meets at least one of the following conditions:
channel information recovered by a recipient based on the first type received is unknown to the first node;
a generator for generating the first type is obtained based on training;
and the first type does not belong to CSI defined by 3GPP Rel-17 or a previous version of 3GPP Rel-17.

As one embodiment, the first candidate offset is related to whether the first CSI type set comprises the first type.

As one embodiment, any CSI type in the first CSI type set is the first type, or any CSI type in the first CSI type set is not the first type.

As one embodiment, the first receiver 1201 receives target signaling; and the target signaling is used for triggering sending of the first channel information, and CRC included in the target signaling is scrambled through an RNTI other than a C-RNTI.

As one embodiment, the CRC included in the target signaling is scrambled through a terminal group-dedicated RNTI, and terminals in a terminal group corresponding to the terminal group-dedicated RNTI have AI capability.

As one embodiment, the power offset of the sending power of the first reference signal with respect to the sending power of the SSB depends on a CSI type corresponding to the first channel information.

As one embodiment, the plurality of candidate offsets are associated with a plurality of CSI type sets, and the first CSI type set is a CSI type set among the plurality of CSI type sets, with which the first candidate offset is associated.

As one embodiment, the first CSI type set comprises the first type, and the first candidate offset is equal to a first value; and the first CSI type set does not comprise the first type, and the first candidate offset is equal to a second value.

As one embodiment, a type of the first channel information is used for determining the first candidate offset from a first power offset and a second power offset.

As one sub-embodiment of this embodiment, the type of the first channel information comprises the first type, and the first candidate offset is equal to the first power offset; and the type of the first channel information does not comprise the first type, and the first candidate offset is equal to the second power offset.

As one embodiment, the first node is user equipment.

As one embodiment, the first node is a relay node device.

As one embodiment, the first receiver 1201 comprises at least one of {the antenna 452, the receiving device 454, the receiving processor 456, the multi-antenna receiving processor 458, the controller/processor 459, the memory 460, and the data source 467} in Embodiment 4.

As one embodiment, the first transmitter 1202 comprises at least one of {the antenna 452, the transmitting device 454, the transmitting processor 468, the multi-antenna transmitting processor 457, the controller/processor 459, the memory 460, and the data source 467} in Embodiment 4.

### Embodiment 13

Embodiment 13 illustrates a structural block diagram of a processing apparatus used in a second node according to one embodiment of the present application, as shown in FIG. 13. In FIG. 13, a processing apparatus 1300 in the second node comprises a second transmitter 1301 and a second receiver 1302.

In Embodiment 13, the second transmitter 1301 sends first signaling, wherein the first signaling is used for configuring a first reference signal resource; and sends a first reference signal in the first reference signal resource; the second receiver 1302 receives first channel information; measurement for the first reference signal by a recipient of the first reference signal is used for generating the first channel information, and a power offset of sending power of the first reference signal with respect to sending power of a broadcast signal is a first candidate offset among a plurality of candidate offsets; each of the plurality of candidate offsets is associated with one CSI type set, and the one CSI type set comprises at least one CSI type; candidates of the CSI type comprise at least one of an L1-RSRP, a CRI, an RI, a PMI, a CQI, and an LI; the first candidate offset is a candidate offset, among the plurality of candidate offsets, associated with a first CSI type set; and the first channel information corresponds to one or more CSI types in the first CSI type set.

As one embodiment, the first signaling is used for indicating the plurality of power offsets.

As one embodiment, the candidates of the CSI type comprise a first type, and the first type meets at least one of the following conditions:
channel information recovered by a recipient based on the first type received is unknown to the first node;
a generator for generating the first type is obtained based on training;
and the first type does not belong to CSI defined by 3GPP Rel-17 or a previous version of 3GPP Rel-17.

As one embodiment, the first candidate offset is related to whether the first CSI type set comprises the first type.

As one embodiment, any CSI type in the first CSI type set is the first type, or any CSI type in the first CSI type set is not the first type.

As one embodiment, the second transmitter 1201 receives target signaling; and the target signaling is used for triggering sending of the first channel information, and CRC included in the target signaling is scrambled through an RNTI other than a C-RNTI.

As one embodiment, the CRC included in the target signaling is scrambled through a terminal group-dedicated RNTI, and terminals in a terminal group corresponding to the terminal group-dedicated RNTI have AI capability.

As one embodiment, the power offset of the sending power of the first reference signal with respect to the sending power of the SSB depends on a CSI type corresponding to the first channel information.

As one embodiment, the plurality of candidate offsets are associated with a plurality of CSI type sets, and the first CSI type set is a CSI type set among the plurality of CSI type sets, with which the first candidate offset is associated.

As one embodiment, the first CSI type set comprises the first type, and the first candidate offset is equal to a first value; and the first CSI type set does not comprise the first type, and the first candidate offset is equal to a second value.

As one embodiment, a type of the first channel information is used for determining the first candidate offset from a first power offset and a second power offset.

As one sub-embodiment of this embodiment, the type of the first channel information comprises the first type, and the first candidate offset is equal to the first power offset; and the type of the first channel information does not comprise the first type, and the first candidate offset is equal to the second power offset.

As one embodiment, the second node is a base station device.

As one embodiment, the second node is user equipment.

As one embodiment, the second node is a relay node device.

As one embodiment, the first transmitter 1301 comprises at least one of {the antenna 420, the transmitting device 418, the transmitting processor 416, the multi-antenna transmitting processor 471, the controller/processor 475, and the memory 476} in Embodiment 4.

As one embodiment, the first receiver 1302 comprises at least one of {the antenna 420, the receiving device 418, the receiving processor 470, the multi-antenna receiving processor 472, the controller/processor 475, and the memory 476} in Embodiment 4.

Those ordinarily skilled in the art can understand that all or part of the steps in the above method can be completed by instructing relevant hardware through a program, and the program can be stored in a computer-readable storage medium, such as a read-only memory, a hard disk or an optical disk, etc. Optionally, all or part of the steps in the above embodiments can also be implemented using one or more integrated circuits. Accordingly, each module unit in the above embodiments can be implemented in the form of hardware or in the form of a software function module. The present application is not limited to any specific form of software and hardware combination. The user equipment, terminals, and UE in the present application include but are not limited to drones, communication modules on drones, remote-controlled aircrafts, aircrafts, small aircrafts, mobile phones, tablet computers, notebook computers, vehicle-mounted communication devices, transportation means, vehicles, RSUs, wireless sensors, Internet cards, Internet of Things terminals, RFID (Radio Frequency Identification) terminals, NB-IoT (Narrow Band Internet of Things) terminals, MTC (machine type communication) terminals, eMTC (enhanced MTC) terminals, data cards, Internet cards, vehicle-mounted communication devices, low-cost mobile phones, low-cost tablet computers, and other wireless communication devices. The base stations or system devices in the present application include but are not limited to macrocell base stations, microcell base stations, small cell base stations, femtocells, relay base stations, eNBs (evolved Nodes B), gNBs, TRPs, GNSSs (Global Navigation Satellite Systems), relay satellites, satellite base stations, aerial base stations, RSUs, drones, test devices, such as transceiving apparatus or signaling testers that simulate some functions of the base stations, and other wireless communication devices.

Those skilled in the art should understand that the present invention can be implemented in other specified forms without departing from its core or basic features. Therefore, the embodiments disclosed at present should be regarded as descriptive rather than restrictive in any way. The scope of the invention is determined by the appended claims rather than the previous description, and all changes within their equivalent meanings and areas are deemed to be included therein.

## Claims

1. A first node for wireless communication, comprising:
a first receiver receiving first signaling, the first signaling being used for configuring a first reference signal resource; and receiving a first reference signal in the first reference signal resource;
and a first transmitter sending first channel information,
wherein measurement for the first reference signal is used for generating the first channel information, and a power offset of sending power of the first reference signal with respect to sending power of a broadcast signal is a first candidate offset among a plurality of candidate offsets; each of the plurality of candidate offsets is associated with one CSI type set, and the one CSI type set comprises at least one CSI type; candidates of the CSI type comprise at least one of an L1-RSRP, a CRI, an RI, a PMI, a CQI, and an LI; the first candidate offset is a candidate offset, among the plurality of candidate offsets, associated with a first CSI type set; and the first channel information corresponds to one or more CSI types in the first CSI type set.

2. The first node according to claim 1, wherein the first signaling is used for indicating the plurality of power offsets.

3. The first node according to claim 1, wherein the candidates of the CSI type comprise a first type, and the first type meets at least one of following conditions:
channel information recovered by a recipient based on the first type received is unknown to the first node;
a generator for generating the first type is obtained based on training;
and the first type does not belong to CSI defined by 3GPP Rel-17 or a previous version of 3GPP Rel-17.

4. The first node according to claim 3, wherein the first candidate offset is related to whether the first CSI type set comprises the first type.

5. The first node according to claim 4, wherein any CSI type in the first CSI type set is the first type, or any CSI type in the first CSI type set is not the first type.

6. The first node according to any one of claims 1 to 5, comprising:
the first receiver receiving target signaling,
wherein the target signaling is used for triggering sending of the first channel information, and CRC included in the target signaling is scrambled through an RNTI other than a C-RNTI.

7. The first node according to claim 6, wherein the CRC included in the target signaling is scrambled through a terminal group-dedicated RNTI, and terminals in a terminal group corresponding to the terminal group-dedicated RNTI have Al capability.

8. A second node for wireless communication, comprising:
a second transmitter sending first signaling, the first signaling being used for configuring a first reference signal resource; and sending a first reference signal in the first reference signal resource;
and a second receiver receiving first channel information,
wherein measurement for the first reference signal by a recipient of the first reference signal is used for generating the first channel information, and a power offset of sending power of the first reference signal with respect to sending power of a broadcast signal is a first candidate offset among a plurality of candidate offsets; each of the plurality of candidate offsets is associated with one CSI type set, and the one CSI type set comprises at least one CSI type; candidates of the CSI type comprise at least one of an L1-RSRP, a CRI, an RI, a PMI, a CQI, and an LI; the first candidate offset is a candidate offset, among the plurality of candidate offsets, associated with a first CSI type set; and the first channel information corresponds to one or more CSI types in the first CSI type set.

9. A method used in a first node for wireless communication, comprising:
receiving first signaling, the first signaling being used for configuring a first reference signal resource;
receiving a first reference signal in the first reference signal resource;
and sending first channel information,
wherein measurement for the first reference signal is used for generating the first channel information, and a power offset of sending power of the first reference signal with respect to sending power of a broadcast signal is a first candidate offset among a plurality of candidate offsets; each of the plurality of candidate offsets is associated with one CSI type set, and the one CSI type set comprises at least one CSI type; candidates of the CSI type comprise at least one of an L1-RSRP, a CRI, an RI, a PMI, a CQI, and an LI; the first candidate offset is a candidate offset, among the plurality of candidate offsets, associated with a first CSI type set; and the first channel information corresponds to one or more CSI types in the first CSI type set.

10. A method used in a second node for wireless communication, comprising:
sending first signaling, the first signaling being used for configuring a first reference signal resource;
sending a first reference signal in the first reference signal resource;
and receiving first channel information,
wherein measurement for the first reference signal by a recipient of the first reference signal is used for generating the first channel information, and a power offset of sending power of the first reference signal with respect to sending power of a broadcast signal is a first candidate offset among a plurality of candidate offsets; each of the plurality of candidate offsets is associated with one CSI type set, and the one CSI type set comprises at least one CSI type; candidates of the CSI type comprise at least one of an L1-RSRP, a CRI, an RI, a PMI, a CQI, and an LI; the first candidate offset is a candidate offset, among the plurality of candidate offsets, associated with a first CSI type set; and the first channel information corresponds to one or more CSI types in the first CSI type set.
